# EUROPEAN PATENT SPECIFICATION

(11) **EP 2 820 320 B1**
(45) Date of publication and mention of the grant of the patent: **15.11.2017**
(21) Application number: 13754737.8
(22) Date of filing: 19.02.2013
(51) Int. Cl.: F16F 1/14, B62D 33/10, F16B 43/00

(54) **STABILISER BAR**
STABILISATORLEISTE
BARRE STABILISATRICE

(30) Priority: 28.02.2012 SE 1250177
(43) Date of publication of application: 07.01.2015
(73) Proprietor: Scania CV AB, 151 87 Södertälje (SE)
(72) Inventor: JÄRNSTRÖM, Sune, S-151 46 Södertälje (SE)
(74) Representative: Scania CV AB
(86) International application number: PCT/SE2013/050138
(87) International publication number: WO 2013/129993

(56) References cited:
- EP-A2- 1 184 269
- EP-A2- 2 030 875
- EP-A2- 2 030 875
- DE-A1- 3 519 868
- JP-A- 2001 039 353
- JP-A- 2004 291 842
- JP-A- 2004 322 937
- JP-A- 2006 170 324
- JP-U- S59 186 187
- JP-U- S59 186 187

## Description

### TECHNICAL FIELD

The present invention relates generally to a stabiliser bar provided with bushing devices to reduce pitching movements in a vehicle. The invention relates particularly to a stabiliser bar for mounting and application to a device for suspending a driver's cab in a vehicle frame, and is particularly intended for commercial heavy vehicles, such as trucks. The invention relates also to a vehicle equipped with such a stabiliser bar.

### TECHNICAL BACKGROUND

Heavy vehicles are normally equipped with a cab which is suspended from the vehicle's frame to enhance comfort for drivers and their passenger. The cab is often tippable to enable convenient access to the vehicle's engine and facilitate maintenance and servicing and is commonly tipped forwards in relation to the longitudinal direction of the vehicle via articulation points arranged at the front. The cab is commonly resiliently suspended in the vehicle frame via these articulation points, preferably with the aid of some known type of suspension device, such as coil springs, air springs or similar.

A stabiliser bar is commonly arranged between the cab's two forward articulation points in order to dampen pitching movements as far as possible. For this purpose, the stabiliser bar is configured, at its end sections, with link arms mounted at the cab's articulation points. The stabiliser bar acts in such a way that a vertical movement, for example in one attachment point of the cab, i.e. on one side of the cab, is transferred in damped form to the cab's second articulation point, on the second side of the cab, with the aid of the stabiliser bar's transverse pivot rod. Any pitching movement in the cab which is initiated by a vertical movement at one side of the vehicle is thus counteracted.

The cab is therefore mounted in a conventional manner on the stabiliser bar via link arms arranged longitudinally to the vehicle and suspended in relation to the frame with the aid of a spring arrangement. At their upper end, the springs are typically mounted, indirectly or directly, on the vehicle cab's frame and at their lower end, indirectly or directly in the vehicle's chassis or frame. The link arms are principally supported at one end in the cab and at their second end in the frame/chassis.

At the articulation point which is mechanically connected to the vehicle's frame or chassis, bearings are commonly used which may be ball bearings, sliding bearings, roller bearings or bearings of a similar type. As there is a risk that the bearings, due to their rigid structure, may transfer undesirable vibrations from the vehicle's base to the cab and that this may disturb the driver, a bushing of an elastic material is used in the articulation point, for example a rubber bushing. Lateral supports or lateral stops, also manufactured from an elastic material, are arranged at the side of the bushing. The bushing and the lateral stops may preferably be manufactured from polyurethane, rubber or a similar material with appropriate elasticity, thus reducing vibrations which otherwise risk being reproduced in the cab. In order not to reduce the lateral rigidity in the articulation point, thereby risking increasing lateral movements in the cab, the lateral stops are compressed between supporting surfaces in the stabiliser bar's link arm element and in the bushing/chassis fixing. When the cab's suspension moves, relative movements occur between the lateral stops and said supporting surfaces.

Patent document SE530551 depicts, for example, a cab suspension where the lateral stops are positioned compressed/wedged between the chassis fixing and the stabiliser bar to achieve the required lateral rigidity in the articulation point. The stabiliser bar rotates or pivots in the event of suspension movements in the vehicle/cab and when the cap is tipped to provide access to the engine, and this generates a relative movement between the lateral stops and the stabiliser bar's adjoining supporting surfaces, as the lateral stops are essentially rotationally constant with the chassis fixing, which causes an undesirable friction in these surfaces. This also results in a rotational rigidity and friction in the articulation point which impairs the cab's suspension. Other disadvantages are also associated with known solutions. For example, wear occurs between parts which rotate/pivot or grind against each other, which in turn subsequently wears away the surface from component parts, which may result in corrosion over time. This in turn causes rattling in the event of the cab's suspension movements which is reproduced in the structure.

There is therefore a need for a new and improved solution comprising a stabiliser bar with a bushing device which resolves said problem and which is simple in its structure and therefore cheap to install but which still eliminates the disadvantages associated with the state of the art.

It is also preferable that the structure takes up as little space as possible in the vehicle but is still reliable and provides a function which is maintenance free and effective. This can be achieved by a structure which eliminates direct contact between the lateral stops and the stabiliser bar's supporting surfaces.

The state of the art does not depict any stabiliser bar which easily and cost-effectively eliminates direct contact between lateral stops and the stabiliser bar. Document EP2030875A2 discloses a stabiliser bar comprising all the features of the preamble of claim 1.

### SUMMARY OF THE INVENTION

One object of the invention is to resolve the foregoing problem and to propose a stabiliser bar where an air gap is provided between the lateral stops and the stabiliser bar's supporting surfaces positioned against the bushing device, which parts are not in direct contact with one another, i.e. do not slide against and thus do not wear against one another.

A further object of the invention is that the structure should manifest less rotational rigidity in order to achieve a smoother and more comfortable suspension in the cab and also eliminate the friction between the stabiliser bar and the lateral stops.

A further object of the invention is that the structure should maintain lateral rigidity in the bushing device.

A further object of the invention is that the structure should minimise the risk of corrosion in the articulation point in the event of suspension movements.

A further object of the invention is that the structure should minimise the risk of rattling in the articulation point in the event of suspension movements.

A further object of the invention is that it should be possible to implement the structure without having to make significant modifications to known component parts.

A further object of the invention is that it should be possible to manufacture and quality assure component parts separately and independently of one another.

A further object of the invention is that the invention should comprise as few parts as possible and thereby be cheap to manufacture and install.

These and further objects and advantages are achieved according to the invention by a device according to the features indicated in the characterising part of claim 1.

The invention thus relates generally to a stabiliser bar provided with a bushing device to reduce pitching tendencies in a vehicle. The invention relates particularly to a stabiliser bar for suspending a driver's cab in a vehicle frame in a commercial heavy vehicle, such as a truck.

The invention comprises a washer-shaped unit configured in such a way that it combines the function of a spacer sleeve and a bearing-protection washer. The washer-shaped unit according to the invention is manufactured with a slightly greater diameter than the commonly used bearing-protection washer so that it essentially covers the entire lateral stop. The washer-shaped unit is positioned between the lateral stop and the stabiliser bar and eliminates direct contact between the lateral stop and the stabiliser bar. This prevents the lateral stop engaging with the stabiliser bar and reduces or eliminates the friction that otherwise occurs between the parts in the event of suspension movements, whilst still retaining the lateral rigidity in the arrangement.

Integrating a washer and a spacer element in the washer-shaped unit reduces the number of unique parts/part numbers required in the structure, which reduces the storage costs and makes it simpler and cheaper to install the stabiliser bar in the vehicle. Using the washer-shaped unit at the cab's four standard attachment points reduces from eight to four the number of parts which have to be installed in the vehicle for this function. In spite of this, the disadvantages of the state of the art are eliminated and a more reliable and maintenance-free function is achieved.

The solution according to the invention can be easily implemented in existing stabiliser bars by grinding or milling away, according to the example, approximately 3 mm of material from each side of, for example, the stabiliser bar and/or the chassis fixing/chassis bushing to make space for the washer-shaped unit.

The advantages of the structure according to the invention are therefore that it results in less rotational rigidity, which provides a more or less friction-free and hence smoother suspension in a vertical direction and enhances driver/passenger comfort. The solution results in less wear between component parts, which reduces the risk of corrosion and associated rattling, providing at the same time a high degree of lateral rigidity in the bearing point which counteracts lateral movements in the vehicle's cab.

Further features and advantages of the invention are indicated by the more detailed description of the invention set out below and the attached drawings and other claims.

### BRIEF LIST OF DRAWINGS

The invention is described in more detail below in the form of preferred embodiment examples with reference to the attached drawings.
**Figure 1** depicts a perspective view of a known type of stabiliser bar.
**Figure 2** depicts a perspective view of a forward suspension device equipped with a spring, intended for a vehicle cab, where the cab and the vehicle's chassis are schematically illustrated with dotted lines.
**Figure 3** depicts in greater detail and in a cross-section, a known stabiliser bar's one end section and illustrates how the lateral stops are compressed between the supporting surfaces of the chassis fixing/bushing and the stabiliser bar.
**Figure 4** depicts a cross-section through a stabiliser bar's one end section according to the invention, similar to that depicted in Figure 3 and illustrates how a washer-shaped unit is arranged so that there is an air gap between the lateral stop and the stabiliser bar's supporting surfaces.
**Figure 5** depicts a cross-section through a washer-shaped unit according to the invention.

### DESCRIPTION OF PREFERRED EMBODIMENTS

The invention thus relates to a stabiliser bar for reducing pitching movements in a resiliently suspended vehicle cab. The stabiliser bar is pivotably arranged between two articulation points in the cab, transverse to the longitudinal direction of the vehicle, and compensates for vertical movements which occur when the vehicle moves over an uneven surface with the object of enhancing driver comfort.

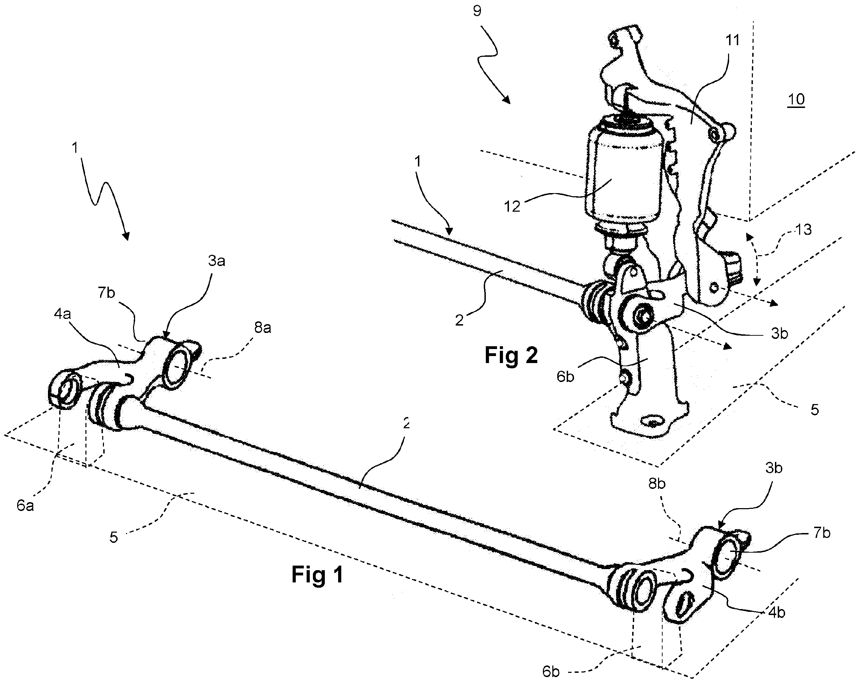

**Figure 1** depicts a perspective view as seen obliquely from in front of a typical stabiliser bar 1 with a pivotable axle 2 arranged between two end section 3a, b, each equipped with a link arm 4a, b. Both end sections 3a, b of the pivotable axle 2 are rotatably supported in a conventional manner in the vehicle's chassis 5 with the aid of chassis fixings 6a, b (schematically illustrated with dotted lines only). The outer rear sections or legs 7a, b of the link arms 4a, b are articulatedly attached to the vehicle cab's frame (not depicted) via articulations 8a, b (illustrated with dotted lines only).

**Figure 2** more schematically depicts a perspective view of a known suspension device 9 comprising a stabiliser bar 1 with pivotable axle 2 articulatedly mounted in the vehicle's frame 5 via a chassis fixing 6b and the one link arm 3b of which is articulatedly arranged in the vehicle cab's frame 10 with the aid of a cab fixing 11. An air spring 12, which may be equipped with an integrated shock absorber (not depicted), is arranged in this case between the cab fixing 11 and the chassis fixing 6b. The air spring 12 bears the cab's weight. The suspension device 9 allows the vehicle cab 10 to move in a vertical direction 13 but should as far as possible limit movements in other directions.

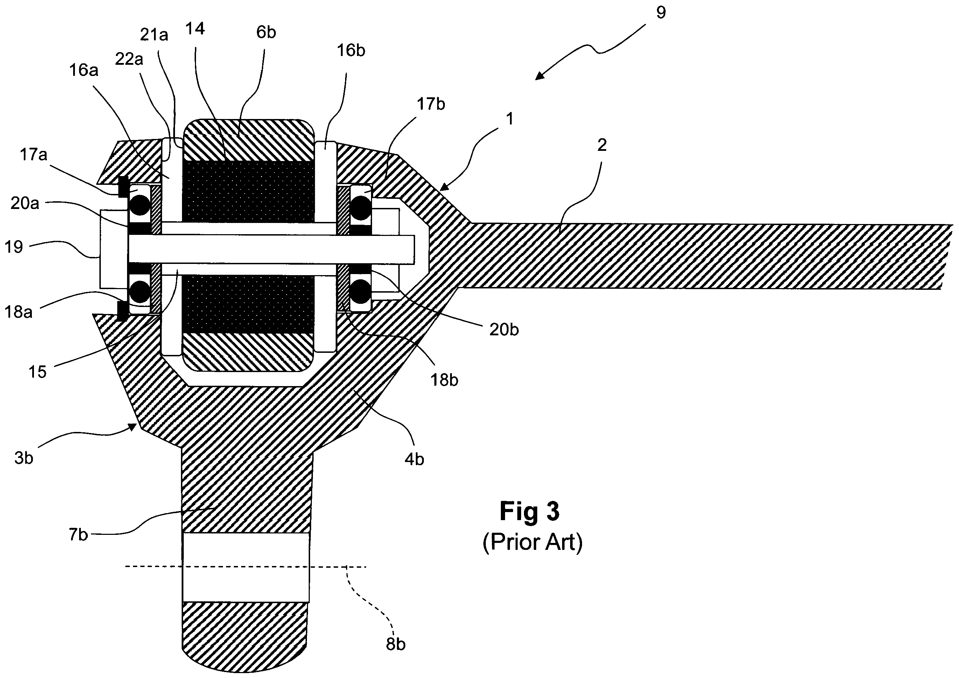

**Figure 3** depicts in greater detail an axial cross-section through a known stabiliser bar 1 and its attachment to a chassis fixing 6b. The stabiliser bar's pivotable axle 2 is moulded in one piece with the link arm 4b configured in the stabiliser bar's end section 3b. The link arm 4b is intended to be mounted in the vehicle's chassis fixing 6b and articulatedly arranged in the chassis fixing 6b via a bushing 14 made from an elastic material, for example polyurethane (PUR), rubber or similar. A sleeve 15 is arranged through the bushing 14 to absorb clamping forces acting in a lateral direction. The link arm 4b is also configured with a rear leg 7b, here pointing downwards in the figure, to which the cab is attached via an articulation 8b.

Lateral stops, 16a, b are arranged on each side of the bushing 14 and the chassis fixing 6b in the form of larger washers of an appropriate thickness, also made of an elastic material, such as polyurethane (PUR), rubber or similar. Bearings 17a, b, preferably ball bearings, are arranged outside the lateral stops 16a, b on each side. The protective washers 18a, b are arranged between the bearings 17a, b and the lateral stops 16a, b. A screw joint 19 holds the bushing 14, the bearings 17a, b and the lateral stops 16a, b in place in the chassis fixing 6a and spacer sleeves 20a, b, arranged on each side of the bushing 14, act against the protective washers 18a, b, relieving any compressive forces acting against the bearings 17a, b. The lateral stops 16a, b support the bushing 14 and the chassis fixing 6a in a lateral direction, thereby increasing the axial lateral rigidity in the suspension device 9.

The primary object of the rubber bushing 14 and the lateral stops 16a, b is to reduce reproduction of vibrations from the vehicle's chassis 5 to the vehicle's cab 10 and thus act as a vibration-isolation means which enhances driving comfort. The rubber bushing 14 primarily isolates vibrations in a vertical direction and in the longitudinal direction of the vehicle, whilst the lateral stops 16a, b primarily isolate vibrations in the transverse direction of the vehicle.

The bushing 14 is compressed during manufacture into the chassis fixing 6a and the lateral stops 16a, b are mounted with a clamp fitting between the bushing's and the chassis fixing's supporting surface 21 and the stabiliser bar's supporting surface 22 positioned against the bushing/chassis fixing, thereby achieving the required rigidity in the suspension device 9. When the suspension device 9 is subject to suspension movements during operation of the vehicle, a relative rotational motion is generated between the chassis fixing 16b and the stabiliser bar 1, causing friction and wear in their supporting surfaces 21a, b and 22a, b. Any outer coating on these supporting surfaces 21a, b and 22a, b becomes worn down over time, causing corrosion to occur when moisture penetrates the supporting surfaces 21a, b and 22a, b. This in turn leads to further increased friction in the articulation and as a consequence increases wear and the risk of rattling.

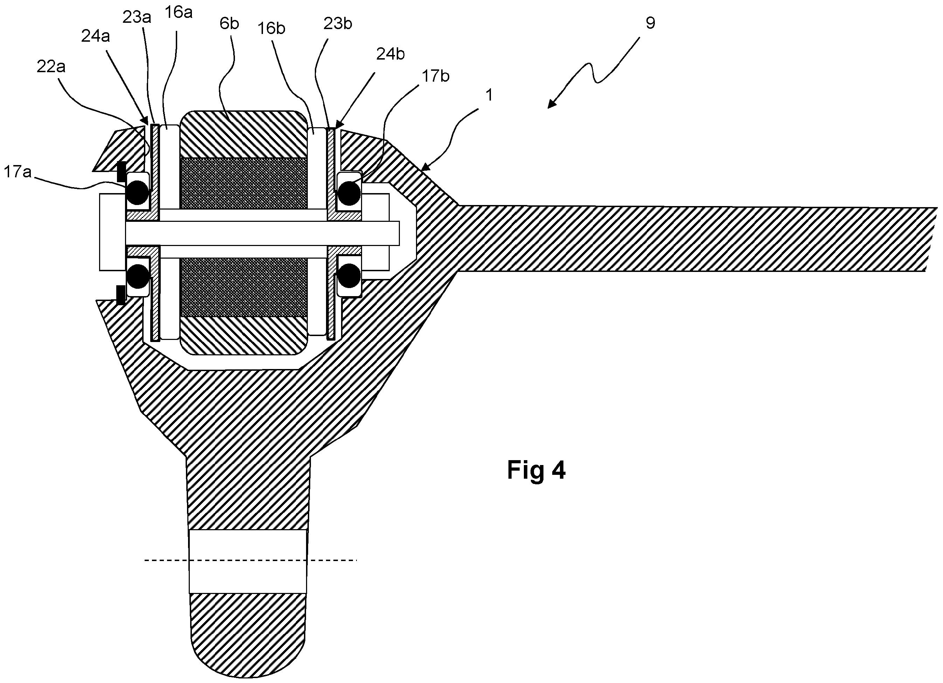

**Figure 4** depicts a cross-section through a stabiliser bar's 1 one end section 3b according to the invention, similar to that depicted in Figure 3, but in this case illustrating how the washer-shaped units 23a, b replace the protective washers 18a, b and the spacer sleeves 20a, b in the known suspension device 9 depicted in Figure 3.

The washer-shaped unit 23a, b essentially comprises an integrated washer and spacer sleeve manufactured as a single part, which may, for example, be moulded of metal. The washer-shaped unit's 23a, b external diameter essentially corresponds to the current diameter of the lateral stop 16a, b, so that it entirely or at least essentially supports the lateral stop 16a, b in its axial direction. The washer-shaped unit 23a, b is arranged in the suspension device 9 in such a way that there is an air gap 24a, b between the washer-shaped unit 23a, b and the stabiliser bar's supporting surfaces 22a, b.

Integrating a washer with a spacer sleeve in a washer-shaped unit 23a, b achieves a sufficiently rigid arrangement in order to give the lateral stops 16a, b, made from an elastic material, the necessary rigidity without requiring the lateral stops 16a, b to be directly supported by the stabiliser bar's supporting surfaces 22a, b positioned against the bushing/chassis fixing. In this way, reduced friction and less rotational rigidity is thus achieved in the articulation, which provides a smoother vertical suspension whilst still maintaining lateral rigidity. The wear between the parts in the suspension device is reduced significantly as is the risk of rattling and the number of component parts in the structure.

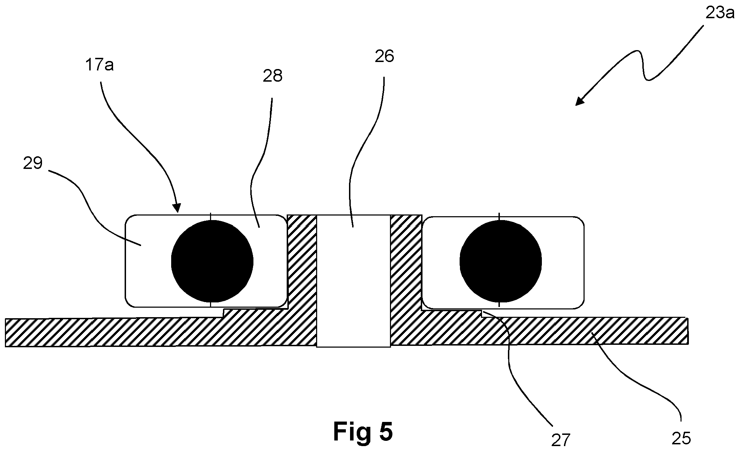

**Figure 5** depicts a cross-section through a washer-shaped unit 23a according to the invention. The washer-shaped unit 23a is dimensioned with a greater diameter than the standard protective washer 18a, b and comprises a spacer element 30 integrated into its central section. The spacer element's axial length essentially corresponds to the thickness of the bearing 17a. The plate-shaped part 25 of the washer-shaped unit 23a is equipped with a raised section 27 next to the central hole 26, which washer-shaped unit is of a slightly thicker material. The raised section is preferably up to approximately 1 mm but is approximately 0.6 mm according to the example. The raised section 27 is arranged to lie against and support the ball bearing's inner ring section 28 in the mounted position. This prevents that washer-shaped unit 23a coming into direct contact with the ball bearing's outer ring section 29 preventing friction.

The above description is primarily intended to facilitate comprehension of the invention. The invention is of course not limited therefore to the embodiments indicated above, since other variants of the invention are also possible and conceivable within the scope of the concept of the invention and the protection scope of the claims set out below.

## Claims

1. Stabiliser bar (1) intended to counteract pitching movements in a vehicle cab (10) comprising a suspension device (9) with a bushing (14) on each side of which lateral stops (16a, b) are arranged, made from an essentially elastic material, and bearings (17a, b) arranged on the outside of these, wherein
- a washer-shaped unit (23a, b) is arranged between the bearings (17a, b) and the lateral stops (16a, b) and **characterised in that**, the washer-shaped unit (23a, b) is configured with a diameter which essentially corresponds to the lateral stops' diameter, and
- the washer-shaped unit (23a, b) is arranged to support the lateral stops (16a, b) in an axial direction and configured to absorb any axial forces exerted by the lateral stop and to form an air gap (24a, b) between the stabiliser bar's supporting surfaces (22a, b) and the washer-shaped unit (23a, b), eliminating in this way direct contact between the stabiliser bar's supporting surfaces (22a, b) and the lateral stops (16a, b).

2. Stabiliser bar (1) according to claim 1,
**characterised in that**
- the washer-shaped unit (23a, b) is equipped with a raised section (27) next to the central hole (26) which is engaged with the bearing's (17a, b) inner ring section (28) with the object of eliminating any friction against the bearing's (17a, b) outer rotationally fixed ring section (29).

3. Stabiliser bar (1) according to claims 1 or 2,
**characterised in that**
- the raised section is preferably up to approximately 1 mm but is preferably approximately 0.6 mm.

4. Stabiliser bar (1) according to any one of the foregoing claims,
**characterised in that**
- the washer-shaped unit (23a, b) is made of metal.

5. Stabiliser bar (1) according to any one of the foregoing claims,
**characterised in that**
- the washer-shaped unit (23a, b) comprises an essentially flat circular plate-shaped section (25) and an integrated centrally positioned spacer element (30).

6. Stabiliser bar (1) according to any one of the foregoing claims,
**characterised in that**
- the bearing (17a, b) comprises ball bearings.

7. Stabiliser bar (1) according to any one of the foregoing claims,
**characterised in that**
- the bearing (17a, b) comprises sliding bearings.

8. A vehicle comprising a stabiliser bar according to any one of claims 1-7.

## Patentansprüche

1. Stabilisatorleiste (1), die Nickbewegungen in einem Fahrerhaus (10) entgegenwirken soll, umfassend eine Aufhängevorrichtung (9) mit einer Buchse (14), bei der auf jeder Seite seitliche Anschläge (16a, b) angeordnet sind, die aus einem im Wesentlichen elastischen Material hergestellt sind, und Lager (17a, b), die außerhalb davon angeordnet sind,
wobei
- eine scheibenförmige Einheit (23a, b) zwischen den Lagern (17a, b) und den seitlichen Anschlägen (16a, b) angeordnet ist und **dadurch gekennzeichnet ist, dass** die scheibenförmige Einheit (23a, b) mit einem Durchmesser ausgelegt ist, der im Wesentlichen dem Durchmesser der seitlichen Anschläge entspricht, und
- die scheibenförmige Einheit (23a, b) angeordnet ist, um die seitlichen Anschläge (16a, b) in axialer Richtung zu stützen, und ausgelegt ist, um axiale Kräfte, die von dem seitlichen Anschlag ausgeübt werden, zu absorbieren und eine Luftspalte (24a, b) zwischen den Stützflächen (22a, b) der Stabilisatorleiste und der scheibenförmigen Einheit (23a, b) zu bilden, sodass auf diese Weise ein direkter Kontakt zwischen den Stützflächen (22a, b) und den seitlichen Anschlägen (16a, b) beseitigt wird.

2. Stabilisatorleiste (1) nach Anspruch 1,
**dadurch gekennzeichnet, dass**
- die scheibenförmige Einheit (23a, b) mit einem erhabenen Abschnitt (27) neben dem Mittelloch (26) versehen ist, das mit dem inneren Ringabschnitt (28) des Lagers (17a, b) in Eingriff steht, um eine Reibung gegen den äußeren drehbar befestigten Ringabschnitt (29) des Lagers (17a, b) zu beseitigen.

3. Stabilisatorleiste (1) nach Anspruch 1 oder 2,
**dadurch gekennzeichnet, dass**
- der erhabene Abschnitt vorzugsweise bis etwa 1 mm beträgt, aber vorzugsweise etwa 0,6 mm beträgt.

4. Stabilisatorleiste (1) nach einem der vorhergehenden Ansprüche,
**dadurch gekennzeichnet, dass**
- die scheibenförmige Einheit (23a, b) aus Metall hergestellt ist.

5. Stabilisatorleiste (1) nach einem der vorhergehenden Ansprüche,
**dadurch gekennzeichnet, dass**
- die scheibenförmige Einheit (23a, b) einen im Wesentlichen flachen kreisscheibenförmigen Abschnitt (25) und ein integriertes, mittig angeordnetes Abstandselement (30) umfasst.

6. Stabilisatorleiste (1) nach einem der vorhergehenden Ansprüche,
**dadurch gekennzeichnet, dass**
- das Lager (17a, b) Kugellager umfasst.

7. Stabilisatorleiste (1) nach einem der vorhergehenden Ansprüche,
**dadurch gekennzeichnet, dass**
- das Lager (17a, b) Gleitlager umfasst.

8. Fahrzeug, das eine Stabilisatorleiste nach einem der Ansprüche 1-7 umfasst.

## Revendications

1. Barre stabilisatrice (1) destinée à contrer des mouvements de tangage dans une cabine de véhicule (10) comprenant un dispositif de suspension (9) ayant une douille (14) sur chaque côté de laquelle sont agencées des butées latérales (16a, b), constituées d'un matériau essentiellement élastique, et des paliers (17a, b) agencés sur l'extérieur de celles-ci,
dans laquelle
- une unité en forme de rondelle (23a, b) est agencée entre les paliers (17a, b) et les butées latérales (16a, b) et **caractérisée en ce que** l'unité en forme de rondelle (23a, b) est configurée avec un diamètre qui correspond essentiellement au diamètre des butées latérales, et
- l'unité en forme de rondelle (23a, b) est agencée pour supporter les butées latérales (16a, b) dans une direction axiale et configurée pour absorber les quelconques forces axiales exercées par la butée latérale et pour former un interstice d'air (24a, b) entre les surfaces de support (22a, b) de la barre stabilisatrice et l'unité en forme de rondelle (23a, b), éliminant de cette manière un contact direct entre les surfaces de support (22a, b) de la barre stabilisatrice et les butées latérales (16a, b).

2. Barre stabilisatrice (1) selon la revendication 1, **caractérisée en ce que**
- l'unité en forme de rondelle (23a, b) est équipée d'une section surélevée (27) à côté du trou central (26) qui vient en prise avec la section annulaire intérieure (28) des paliers (17a, b) dans le but d'éliminer tout frottement contre la section annulaire extérieure fixe en rotation (29) des paliers (17a, b).

3. Barre stabilisatrice (1) selon les revendications 1 ou 2, **caractérisée en ce que**
- la section surélevée va de préférence jusqu'à approximativement 1 mm, mais est de préférence d'approximativement 0,6 mm.

4. Barre stabilisatrice (1) selon l'une quelconque des revendications précédentes, **caractérisée en ce que**
- l'unité en forme de rondelle (23a, b) est constituée de métal.

5. Barre stabilisatrice (1) selon l'une quelconque des revendications précédentes, **caractérisée en ce que**
- l'unité en forme de rondelle (23a, b) comprend une section en forme de plaque circulaire essentiellement plate (25) et un élément d'espacement intégré positionné centralement (30).

6. Barre stabilisatrice (1) selon l'une quelconque des revendications précédentes, **caractérisée en ce que**
- le palier (17a, b) comprend des roulements à billes.

7. Barre stabilisatrice (1) selon l'une quelconque des revendications précédentes, **caractérisée en ce que**
- le palier (17a, b) comprend des paliers glissants.

8. Véhicule comprenant une barre stabilisatrice selon l'une quelconque des revendications 1 à 7.
